# EUROPEAN PATENT APPLICATION

(11) **EP 2 713 651 A1**
(43) Date of publication of application: **02.04.2014**
(21) Application number: 12306189.7
(22) Date of filing: 28.09.2012
(51) Int. Cl.: H04W 36/02, H04W 28/08, H04W 92/16, H04W 84/04

(54) **Method for handover management within heterogeneous networks**

(71) Applicant: Alcatel Lucent, 75007 Paris (FR)
(72) Inventor: Godin, Philippe, 91620 Nozay (FR); Palat, Sudeep, Swindon Western Isles SN5 7DJ (GB)
(74) Representative: 2SPL Patentanwälte

(57) **Abstract**

A base station (1) controlling a first cell and providing a user plane (3) and a control plane (4) to a user equipment (2), said first cell overlaying a second cell under control of a second base station (5) connected to the said base station by means of a 3GPP X2 interface, said second cell (5) being a potential handover target of the user equipment (2), the said user plane (3) including a packet data convergence protocol layer, a radio link control layer, a medium access control layer, and a physical layer, wherein the said base station (1) is configured to switch, over the 3GPP X2 interface, the medium access control layer, and the physical layer of the user plane (3) to the said second base station so that the user plane traffic is delivered to the user equipment (2) through the medium access control layer, and the physical layer of the of the said second base station.

## Description

### FIELD OF THE INVENTION

The present invention relates to protocol stack architecture within Long Term Evolution (LTE) systems.

### BACKGROUND OF THE INVENTION

It is known that deploying small cells within a cellular network has the effect of enhancing the network capacity. Accordingly, to promote broadband services and meet the traffic growth, there have been different wireless network deployments including different cell sizes ranging from kilometers down to meters.

Concretely, a cellular network includes a plurality of sets of small cells, respectively, overlaid by a big umbrella cell called macro cell. Small cells - including micro cells, pico cells and femto cells - are conventionally deployed in dense traffic environments such as urban/suburban areas and city centers.

It follows that to support dense traffic in a given area a large number of small cells on different frequencies could be deployed, resulting in inter-frequency heterogeneous networks. For example, the use of a higher frequency for the small cell layer compared to the macro cell overlay network layer enables high data rates for the small cell traffic.

However, one of the most challenging issues of small cell networking is handover management, or more generally mobility management between the macro cells and the small cells. In fact, the denser the small cell deployment is, the more frequent mobile stations move across cells, causing more handover demands. Therefore, to benefit of the high data rates served by the small cells, the mobile station is constrained to experience very frequent heavy handover mechanisms between the macro cell and the small cells, leading to lower quality of service (i.e. degradation of communication quality, temporary interruption, data loss, potential risk of service drop), and faster mobile station power consumption. In particular, this service quality degradation is more severe as the small cells deployment is dense.

An object of the present invention is to enhance the network quality of service in dense small cell networks where the small cells are overlaid by a macro cell network.

Another object of the present invention is to enhance handover mechanisms within inter-frequency heterogeneous networks, and particularly within a large cell (a macro cell) overlaying a plurality of small cells.

Another object of the present invention is to alleviate handover signaling load for small cells of a given macro cell.

Another object of the present invention is to provide a method to deliver the user plane traffic via the small cells to benefit from higher data rates while keeping the user equipment served by the control plane of the macro cell.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to a base station controlling a first cell and providing a user plane and a control plane to a user equipment, said first cell overlaying a second cell under control of a second base station connected to the said base station by means of a 3GPP X2 interface, said second cell being a potential handover target of the user equipment, the said user plane including a packet data convergence protocol layer, a radio link control layer, a medium access control layer, and a physical layer, the said base station is configured to switch, over the 3GPP X2 interface, the medium access control layer, and the physical layer of the user plane to the said second base station so that the user plane traffic is delivered to the user equipment through the medium access control layer, and the physical layer of the of the said second base station.

In accordance with a broad aspect, the above base station is further configured to keep the control plane and the packet data convergence protocol layer and the radio link control layer of the user plane.

In accordance with another broad aspect, the above base station is further configured to send, to the second base station, a message over the 3GPP X2 interface to update the user plane configuration of the said second base station to realize the switch.

In accordance with another broad aspect, the above base station is further configured to send a message, over the 3GPP X2 interface, containing a radio link control packet data unit of user data traffic of the user equipment to the said second base station for delivery to the user equipment.

In accordance with another broad aspect, the above base station if further configured to send, to the second base station, a message over the 3GPP X2 interface to update the user plane configuration of the said second base station to realize the switch, this message containing a radio link control packet data unit of user data traffic of the user equipment to the said second base station for delivery to the user equipment.

Various embodiments further relate to a communication network comprising the above base station.

Various embodiments further relate to methods of handover in a network cell under control of a base station, said network cell overlaying a second cell under control of a second base station connected to the said base station by means of a 3GPP X2 interface, said second cell being a potential handover target of the user equipment, the said user plane including a packet data convergence protocol layer, a radio link control layer, a medium access control layer, and a physical layer, the said method comprising a switching step, over the 3GPP X2 interface, of the medium access control layer, and of the physical layer of the user plane to the said second base station so that the user plane traffic is delivered to the user equipment through the medium access control layer, and the physical layer of the of the said second base station.

While the various embodiments are susceptible to various modifications and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawing in which
- Figure 1 is a schematic diagram illustrating a radio protocol architecture for a user plane and a control plane according to the prior art;
- FIG. 2 is a schematic diagram illustrating a radio protocol architecture for a user plane and a control plane according to one embodiment;
- FIG.3 is a schematic diagram illustrating interactions between network entities in accordance with the above embodiment.

### DETAILED DESCRIPTION OF ILLUSTRATIVE EMBODIMENTS

By the term user equipment (UE) it is intended to mean any user device (also known as mobile station, subscriber station, mobile terminal, user terminal, or wireless device) supporting LTE or LTE-A, or both.

An eNodeB (or eNB for evolved node B, also known as base transceiver system, base station, or access point) controlling a macro cell is designated hereafter as a macro eNodeB (or a macro base station). Similarly, an eNodeB controlling a small cell (such as, a micro cell, a pico cell or a femto cell) is designated as a small eNodeB or a small base station (respectively, a micro eNodeB, a pico eNodeB, a femto eNodeB).

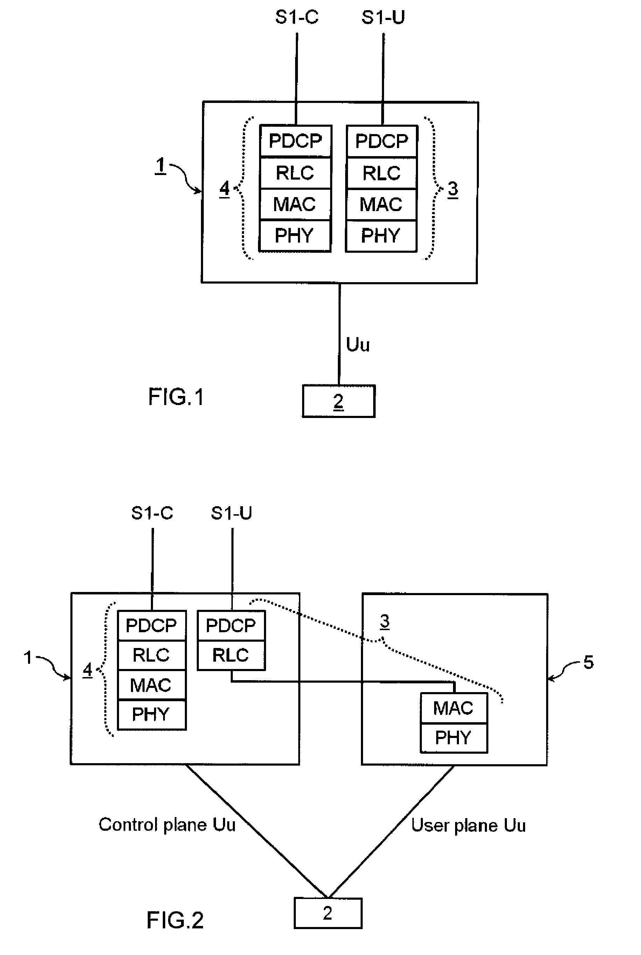

With reference to figure 1, there is shown a macro eNodeB **1** connected to the core network through the 3GPP-defined S1 interface which is divided to S1-Control plane **(S1-C)** and S1-User plane **(S1-U).** Moreover, the macro eNodeB **1** provides, via an LTE radio interface **Uu,** a user plane **3** and a control plane **4** to a UE **2.**

Within LTE networks, eNodeBs are interconnected by means of the 3GPP defined X2 interface.

The layers of the radio interface protocol between the UE **2** and the macro eNodeB **1** are based on the open system interconnection (OSI) model.

In fact, the user plane **3** which is responsible for carrying the data traffic of the UE **2** (i.e. for user data transmission) relies on a protocol stack located in the macro eNodeB **1.** This protocol stack includes a Packet Data Convergence Protocol (PDCP) layer, a Radio Link Control (RLC) layer, a Medium Access Control (MAC) layer, and a Physical (PHY) layer.

The control plane **4** which is responsible for control mechanisms by carrying control information (also known as signaling) is based on a protocol stack located in the macro eNodeB **1.** This protocol stack includes a Packet Data Convergence Protocol (PDCP) layer, a Radio Link Control (RLC) layer, a Medium Access Control (MAC) layer, and a Physical (PHY) layer.

In particular, according to the prior art as depicted in figure 1, the protocol stack for the user plane **3** and the protocol stack for the control plane **4** reside both in the macro eNodeB **1.**

With reference now to figure 2, the protocol stack architecture is designed so that, when the UE **2** served by the macro eNodeB **1** is under (or moves towards) the coverage (or the coverage edge) of a small cell (i.e. a potential handover target small cell) overlaid by the macro cell, the data traffic (i.e. user plane **3)** of the EUTRAN Radio access bearer(s) (E-RAB(s)) of this UE **2** is switched to the small eNodeB controlling the small cell while keeping the control plane **4,** the UE context and the PDCP/RLC entities corresponding to those E-RABs located in the macro eNodeB **1.** In particular, the protocol architecture of the user plane **3** and the one of the control plane **4** are designed so that when a UE **2** moves from the macro cell to the small cell, the handover signaling and actions involving the macro eNodeB **1** and the overall handover interruption time is reduced to its minimum level.

By switching the MAC layer and the PHY layer of the user plane **3** in the macro eNodeB **1** to the small eNodeB **5,** it is intended to mean the fact of delegating/affecting the functions of these layers to their corresponding layers in the small eNodeB **5.**

Accordingly, in one embodiment, the protocol stack for the control plane **4** and for the user plane **3** are split between two eNodeBs (i.e. two cells), namely the serving macro eNodeB **1** and the serving small eNodeB **5** as follows
- the protocol stack for the control plane **4** is maintained in the serving macro eNodeB **1;** and
- the protocol stack for the user plane **3** is split between the macro eNodeB **1** and the small eNodeB **5:** the PDCP layer and the RLC layer reside in the macro eNodeB **1,** while the MAC layer and PHY layer for the user plane **3** are switched to the small eNodeB **5.**

Consequently, the user plane traffic (i.e. data stream(s)) is steered to the small eNodeB **5** as much as possible while keeping the control plane traffic on the macro eNodeB **1**.

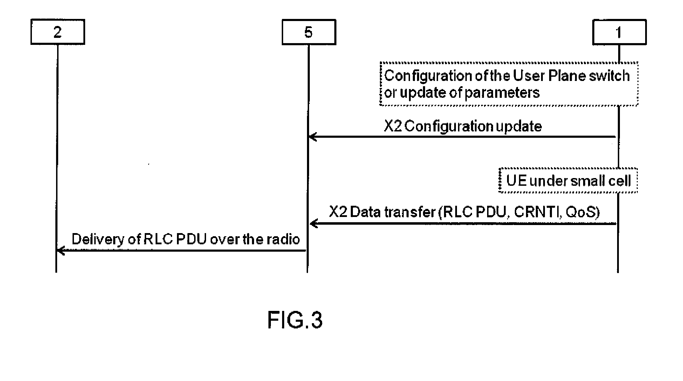

In figure 3 which corresponds to the protocol architecture of the above embodiment, the 3GPP-defined X2 interface between the macro eNodeB **1** and the small eNodeB **5** is adapted to enable the transfer, from the macro eNodeB **1** to the small eNodeB **5,** of the RLC PDUs (Radio Link Control Packet Data Units) of the multiple E-RABs (user data traffic) of the UE **2** (i.e. requesting, over the X2 interface, the small eNodeB **5** to support the user plane traffic of the user equipment **2).**

In fact, an X2 "data transfer" message (see figure 3) is configured to include, in addition to the actual RLC PDU to deliver, an identification of the UE **2** (such as the CRNTI for Connection Radio Network Temporary Identifier) and a QoS associated to the RLC PDU in order to enable a suitable scheduling at the small eNodeB **5** over the air.

Further, one or several 3GPP-defined X2 "configuration update" messages sent from the macro eNodeB **1** to the small eNodeB **5** is (are) programmed to update the user plane configuration (see figure3) of the small eNodeB **5** such as to trigger the switch of the MAC and PHY layers above-mentioned for the UE **2.** This switch may either happen in anticipation of the first X2 "data transfer" message above-mentioned (i.e. in anticipation of the first RLC PDU transfer), or at the same time in which case the X2 messages could be combined (e.g. piggyback of the configuration parameters contained in the X2 "configuration update" message into the X2 data transfer message so that the first X2 data transfer message also serves as trigger of the user plane switch).

Besides, other X2 configuration messages may also further be sent from the macro eNodeB **1** to the small eNodeB **5** to update the control of the scheduling in case of necessary updates (figure 3) from RRC (Radio Resource Control) to MAC (in the small eNodeB **5)** (control plane remaining in the macro eNodeB **1).**

The macro eNodeB is further configured to send to the UE **2** a control plane message in order to inform this UE **2** of the split with the small eNodeB **5** and so that this UE **2** can send the user plane uplink data to the small cell only and the control plane uplink data to the macro eNodeB only , while respecting prioritization.

When the UE **2** moves from/to the macro cell to/from the small cell, the RLC retransmissions are carried out if necessary by the central RLC entities located in the macro eNodeB **1** while no PDCP sequence transfer is needed due to the central PDCP entities. The UE **2** receives the user data traffic either from the macro eNodeB **1** or from the small eNodeB **5** depending of the switch as appropriate.

Accordingly, the particular architecture depicted in figure **2** of the protocol stack allows to switch the user plane **3** back and forth between the macro eNodeB **1** and the small eNodeB **5** without needing to switch or relocate the control plane **4,** without needing to relocate the UE context and also without relocating these PDCP/RLC entities between the small eNodeB **5** and the macro eNodeB **1** thus ensuring complete seamless handover procedures. The control plane is instantiated in the macro eNodeB **1** and the user plane traffic is switched below the radio link control layer from this macro eNodeB **1** to be delivered through the medium access control layer, and the physical layer of the of the small eNodeB 5. A MAC entity is used in the small eNodeB **5** in order to deliver the RLC PDUs data traffic originating from the macro eNodeB **1** from the multiple E-RABs of multiple UEs **2.**

When the UE **2** further moves from the coverage of a first small cell to another potential handover target second small cell, both the first small cell and the potential handover target second small cell being overlaid by a same macro cell, only the control plane is instantiated and the MAC layer and the physical layer of the user plane can be switched (delegated) to the potential handover target second small eNodeB (the PDCP/RLC layer of the protocol stack for the user plane is kept centralized in the macro eNodeB **1).**

Advantageously, the fact of keeping the protocol stack for the control plane and the PDCP and the RLC layers (in particular, centralized RLC layer) of the protocol stack for the user plane on the macro eNodeB **1** allows to switch the user plane back and forth between the macro cell and the small cell(s) without needing to relocate the control plane of the UE **2,** the UE context and the RLC/PDCP entities between the small eNodeB **5** and the macro eNodeB **1,** therefore ensuring complete seamless handover procedures, in particular if the switch is done early enough to also avoid a synchronization interruption time for the small cell. This is of particular importance with respect to the performance enhancement targets considering the widespread scenario of a UE moving across a heterogeneous network with dense deployment of small cells but without continuous coverage of the small cell layer. Therefore, with the disclosed protocol architecture, the UE can benefit from the high data rates for user data in the small cells while not degrading the control plane mobility performance.

Advantageously, according to the above described method,
- all or some of the user plane bearers (User plane Uu in figure 2) can be carried over the small eNodeB **5** and the selection of which user plane bearers is sent over the small eNodeB **5** is controlled by the macro eNodeB 1 (Control plane Uu in figure 2). Further, the split for Uplink and Downlink traffic may be different.

It is to be noted that the above described embodiments may be similarly applied to any other cell (for example a micro cell) overlaying more than one cell of smaller sizes (for example, pico cells or femto cells).

According to the above described method, the UE receives controlled signaling from the macro eNodeB **1** and services from the small eNodeB **5** offering the higher quality of service. Thereby, anywhere within the macro cell coverage, the users enjoy stable (without interruption) and high quality (broadband) services.

It is to be noted that the above described protocol architecture is suitable for current 3GPP releases.

Another advantage of the above described method is that it favors the densification of small cells in inter-frequency heterogeneous networks while ensuring seamless and smooth handover executions therein, which results in better network quality of services.

## Claims

1. A base station (1) controlling a first cell and providing a user plane (3) and a control plane (4) to a user equipment (2), said first cell overlaying a second cell under control of a second base station (5) connected to the said base station by means of a 3GPP X2 interface, said second cell (5) being a potential handover target of the user equipment (2), the said user plane (3) including a packet data convergence protocol layer, a radio link control layer, a medium access control layer, and a physical layer, wherein the said base station (1) is configured to switch, over the 3GPP X2 interface, the medium access control layer, and the physical layer of the user plane (3) to the said second base station so that the user plane traffic is delivered to the user equipment (2) through the medium access control layer, and the physical layer of the of the said second base station.

2. The base station of claim 1, where it is further configured to keep the control plane (4) and the packet data convergence protocol layer and the radio link control layer of the user plane (3).

3. The base station of claim 1 or 2, wherein it is further configured to send, to the said second base station, a message over the 3GPP X2 interface to update the user plane (3) configuration of the said second base station (5).

4. The base station of any of the preceding claims, wherein it is further configured to send a message, over the 3GPP X2 interface, containing at least a radio link control packet data unit of user data traffic of the user equipment (2) to the said second base station (5) for delivery to the user equipment (2).

5. The base station of claim 4, wherein the said message comprises an identification of the user equipment (2) to be delivered over the air by the second base station (5) and a quality of service associated to the radio link control packet data unit to be used for scheduling priority by the said second base station (5).

6. The base station of claims 3 to 5, wherein it is further configured to send, over the 3GPP X2 interface, a message including the message according to claim 3 and the message according to claims 4 and 5.

7. The base station of any of the preceding claims, wherein it is further configured to send to the user equipment (2) a control plane message in order to inform the user equipment (2) of the split with the second base station (5) and so that the UE send the user plane uplink data to the second base station (5) only and the control plane uplink data to the first base station (1) only.

8. A communication network comprising a base station (1) according to any of the preceding claims.

9. A method of handover in a network cell under control of a base station (1), said network cell overlaying a second cell under control of a second base station (5) connected to the said base station by means of a 3GPP X2 interface, said second base cell (5) being a potential handover target of the user equipment (2), the said user plane (3) including a packet data convergence protocol layer, a radio link control layer, a medium access control layer, and a physical layer, wherein the said method comprising a switching step, over the 3GPP X2 interface, of the medium access control layer, and of the physical layer of the user plane (3) to the said second base station so that the user plane traffic is delivered to the user equipment (2) through the medium access control layer, and the physical layer of the of the said second base station.

10. The method of claim 9, wherein it further comprises a keeping step of the control plane (4) and the packet data convergence protocol layer and the radio link control layer of the user plane (3) in the said base station (1).

11. The method of claim 9 or 10, wherein it further comprises a sending step, to the said second base station (5), a message over the 3GPP X2 interface to update the user plane (3) configuration of the said second base station (5).

12. The method of any of claims 9 to 11, wherein it further comprises an instantiation step of the control plane (4) in the said base station (1).

## Amended claims

### Amended claims in accordance with Rule 137(2) EPC.

**1.** A base station (1) controlling a first cell and providing a user plane (3) and a control plane (4) to a user equipment (2), said first cell overlaying a second cell under control of a second base station (5) connected to the said base station by means of a 3GPP X2 interface, said second cell (5) being a potential handover target of the user equipment (2), the said user plane (3) including a packet data convergence protocol layer, a radio link control layer, a medium access control layer, and a physical layer, wherein the said base station (1) is configured to switch, over the 3GPP X2 interface, the medium access control layer, and the physical layer of the user plane (3) to the said second base station so that the user plane traffic is delivered to the user equipment (2) through the medium access control layer, and the physical layer of the of the said second base station.

**2.** The base station of claim 1, where it is further configured to keep the control plane (4) and the packet data convergence protocol layer and the radio link control layer of the user plane (3).

**3.** The base station of claim 1 or 2, wherein it is further configured to send, to the said second base station, a first message over the 3GPP X2 interface to update the user plane (3) configuration of the said second base station (5).

**4.** The base station of any of the preceding claims, wherein it is further configured to send a second message, over the 3GPP X2 interface, containing at least a radio link control packet data unit of user data traffic of the user equipment (2) to the said second base station (5) for delivery to the user equipment (2).

**5.** The base station of claim 4, wherein the said second message comprises an identification of the user equipment (2) to be delivered over the air by the second base station (5) and a quality of service associated to the radio link control packet data unit to be used for scheduling priority by the said second base station (5).

**6.** The base station of claims 3 to 5, wherein it is further configured to send, over the 3GPP X2 interface, a third message including the first message according to claim 3 and the second message according to claims 4 and 5.

**7.** The base station of any of the preceding claims, wherein it is further configured to send to the user equipment (2) a control plane message in order to inform the user equipment (2) of the switch of the medium access control layer and the physical layer of the user plane (3) to the second base station (5) and so that the UE send the user plane uplink data to the second base station (5) only and the control plane uplink data to the first base station (1) only.

**8.** A communication network comprising a base station (1) according to any of the preceding claims.

**9.** A method of handover in a network cell under control of a base station (1), said network cell overlaying a second cell under control of a second base station (5) connected to the said base station by means of a 3GPP X2 interface, said second base cell (5) being a potential handover target of the user equipment (2), the said user plane (3) including a packet data convergence protocol layer, a radio link control layer, a medium access control layer, and a physical layer, wherein the said method comprising a switching step, over the 3GPP X2 interface, of the medium access control layer, and of the physical layer of the user plane (3) to the said second base station so that the user plane traffic is delivered to the user equipment (2) through the medium access control layer, and the physical layer of the of the said second base station.

**10.** The method of claim 9, wherein it further comprises a keeping step of the control plane (4) and the packet data convergence protocol layer and the radio link control layer of the user plane (3) in the said base station (1).

**11.** The method of claim 9 or 10, wherein it further comprises a sending step, to the said second base station (5), a message over the 3GPP X2 interface to update the user plane (3) configuration of the said second base station (5).

**12.** The method of any of claims 9 to 11, wherein it further comprises an instantiation step of the control plane (4) in the said base station (1).
